# EUROPEAN PATENT APPLICATION

(11) **EP 2 762 447 A1**
(43) Date of publication of application: **06.08.2014**
(21) Application number: 13847430.9
(22) Date of filing: 15.10.2013
(51) Int. Cl.: C01B 33/113, H01M 4/48, H01M 10/05

(54) **SILICON OXIDE FOR CATHODE ACTIVE MATERIAL IN SECONDARY BATTERY**

(30) Priority: 16.10.2012 KR 20120114840; 14.10.2013 KR 20130122144
(71) Applicant: LG Chem, Ltd., Seoul 150-721 (KR)
(72) Inventor: PARK, Cheol Hee, Daejeon 305-738 (KR); JEONG, Han Nah, Daejeon 305-738 (KR); LIM, Byung Kyu, Daejeon 305-738 (KR); KIM, Je Young, Daejeon 305-738 (KR); JUNG, Sang Yun, Daejeon 305-738 (KR); KIM, Tae Hoon, Daejeon 305-738 (KR)
(74) Representative: Goddar, Heinz J.
(86) International application number: PCT/KR2013/009213
(87) International publication number: WO 2014/061975

(57) **Abstract**

Provided is silicon oxide for an anode active material of a secondary battery. More particularly, the present invention provides silicon oxide included in an anode active material of a secondary battery, wherein a ratio of a maximum height (h₂) of a peak in a 2 theta range of 40° to 60° to a maximum height (h₁) of a peak in a 2 theta range of 15° to 40° in a X-ray diffraction (XRD) pattern of the silicon oxide satisfies 0.40≤h₂/h₁≤1.5.

## Description

### TECHNICAL FIELD

The present invention relates to silicon oxide for an anode active material of a secondary battery, and more particularly, to silicon oxide in which an amount of oxygen in the silicon oxide is controlled by controlling a pressure and creating a reducing atmosphere.

### BACKGROUND ART

A lithium secondary battery is an energy storage device in which electrical energy is stored in the battery while lithium moves from an anode to a cathode during a discharge process and lithium ions move from the cathode to the anode during charging. When compared to other batteries, lithium secondary batteries have higher energy density and lower self-discharge rate, and thus, the lithium secondary batteries have been widely used in various industries.

Components of a lithium secondary battery may be classified as a cathode, an anode, an electrolyte, and a separator. Lithium metal was used as an anode active material in an early lithium secondary battery. However, since safety concerns may occur as charge and discharge are repeated, lithium metal has been replaced with a carbon-based material, such as graphite. Since a carbon-based anode active material may have an electrochemical reaction potential with lithium ions that is similar to lithium metal and changes in a crystal structure may be small during continuous intercalation and deintercalation processes of lithium ions, continuous charge and discharge may be possible. Therefore, excellent charge and discharge lifetime may be provided.

However, techniques for developing anode active materials with high capacities and high power have been required as the lithium secondary battery market has recently expanded from small-sized lithium secondary batteries used in portable devices to large-sized secondary batteries used in vehicles. Therefore, development of non-carbon-based anode active materials such as materials based on silicon, tin, germanium, zinc, and lead, having a higher theoretical capacity than a carbon-based anode active material has been conducted.

The above anode active materials may increase energy density by improving charge and discharge capacity. However, since dendrites or a non-conductive compound may be generated on an electrode as the charge and discharge are repeated, charge and discharge characteristics may degrade or expansion and shrinkage may increase during the intercalation and deintercalation of lithium ions. Therefore, with respect to secondary batteries using the above anode active materials, retention of discharge capacity (hereinafter, referred to as "lifetime characteristics") according to the repeated charge and discharge may be insufficient, and a ratio of initial discharge capacity to initial charge capacity after manufacturing (discharge capacity/charge capacity; hereinafter, referred to as "initial efficiency") may also be insufficient.

### DISCLOSURE OF THE INVENTION

### TECHNICAL PROBLEM

The present invention provides silicon oxide in which an amount of oxygen in the silicon oxide is controlled by creating a reducing atmosphere and controlling a pressure.

### TECHNICAL SOLUTION

According to an aspect of the present invention, there is provided a method of manufacturing silicon oxide including mixing and heating silicon and silicon dioxide; supplying a gas capable of creating a reducing atmosphere; and reacting the mixture at a pressure of 10⁻⁴ torr to 10⁻¹ torr.

According to another aspect of the present invention, there is provided a method of manufacturing silicon oxide including mixing silicon and silicon dioxide; heating the mixture with a material creating a reducing atmosphere; and reacting the mixture at a pressure of 10⁻⁴ torr to 10⁻¹ torr.

According to another aspect of the present invention, there is provided silicon oxide included in an anode active material of a secondary battery, wherein a ratio of a maximum height (h₂)of a peak in a 2 theta range of 40° to 60° to a maximum height (h₁) of a peak in a 2 theta range of 15° to 40° in a X-ray diffraction (XRD) pattern of the silicon oxide satisfies 0.40≤h₂/h₁≤1.5.

According to another aspect of the present invention, there is provided an anode active material including the silicon oxide.

According to another aspect of the present invention, there is provided a secondary battery including a cathode including a cathode active material; a separator; an anode including the anode active material; and an electrolyte.

### ADVANTAGEOUS EFFECTS

According to the present invention, since an amount of oxygen in silicon oxide may be controlled by creating a reducing atmosphere and controlling a pressure, silicon oxide having a low amount of oxygen of less than 1 based on silicon (Si) atoms may be obtained.

When the silicon oxide having a low amount of oxygen is used as an anode active material, initial efficiency and lifetime characteristics of a secondary battery may be further improved. Also, the initial efficiency of the secondary battery may be predicted by calculating a height ratio in a specific range of 2θ in a X-ray diffraction pattern of the silicon oxide.

### BRIEF DESCRIPTION OF THE DRAWINGS

FIG. 1 is a schematic view illustrating a manufacturing apparatus of silicon oxide according to an embodiment of the present invention; and
Fig. 2 illustrates the maximum height (h₁) of the peak in the 2θ range of 15° to 40° and the maximum height (h₂)of the peak in the 2θ range of 40° to 60° in a X-ray diffraction (XRD) pattern of examples and comparative example according to the present invention.

### MODE FOR CARRYING OUT THE INVENTION

The present invention provides a method of manufacturing silicon oxide including mixing and heating silicon and silicon dioxide, then supplying a gas capable of creating a reducing atmosphere, and reacting the mixture at a pressure of 10⁻⁴ torr to 10⁻¹ torr.

The present invention also provides a method of manufacturing silicon oxide including mixing silicon and silicon dioxide, heating the mixture with a material creating a reducing atmosphere, and then reacting the mixture at a pressure of 10⁻⁴ torr to 10⁻¹ torr.

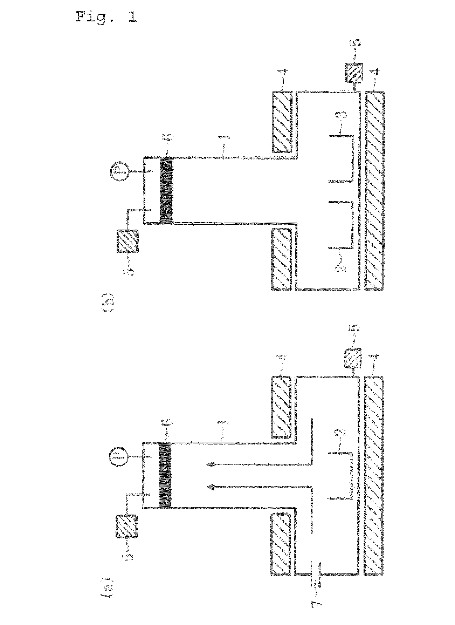

The method of manufacturing silicon oxide according to an embodiment of the present invention will be described in more detail. FIG. 1 is a schematic view illustrating a manufacturing apparatus of silicon oxide according to an embodiment of the present invention. Referring to FIG. 1, the manufacturing apparatus of silicon oxide according to the embodiment of the present invention includes a reaction chamber 1, a reactor 2, an electric furnace 4, a vacuum pump 5, and a collector 6. The reactor 2 is included in the reaction chamber 1 and a mixture of silicon and silicon dioxide is included in the reactor 2. A temperature in the reaction chamber 1 may be increased to a reaction temperature by using the electric furnace 4, and a degree of vacuum in the reaction chamber 1 may be increased to obtain a high degree of vacuum by using the vacuum pump 5 (e.g., rotary pump, turbo molecular pump, etc.). A reducing atmosphere in the reaction chamber 1 may be created or formed by supplying a gas capable of creating a reducing atmosphere into the reaction chamber 1 through a gas nozzle 7 (see FIG. 1(a)) and may be created or formed by including one or more selected from the group consisting of active carbon, magnesium (Mg), aluminum (Al), tantalum (Ta), molybdenum (Mo), calcium (Ca), and zinc (Zn) in a separate container 3 in the reaction chamber 1 (see FIG. 1(b)). Silicon oxide manufactured in the reaction chamber 1 is SiOₓ (where 0<x<1) and is collected in the collector 6 that is included in the reaction chamber 1.

In the method of manufacturing silicon oxide according to an embodiment of the present invention, the mixing of the silicon and silicon dioxide may be performed by using a mechanical stirring device (e.g., paint shaker). However, the present invention is not limited thereto, and any method may be used so long as it may uniformly mix silicon and silicon dioxide. Silicon and silicon dioxide may be mixed in a molar ratio of 0.5:2 to 2:0.5. In the case that silicon and silicon dioxide are mixed in a molar ratio out of the above range, an amount of unreacted silicon or unreacted silicon dioxide may increase, and thus, productivity of silicon oxide may decrease. The mixture of silicon and silicon dioxide prepared as above may be included in the reaction chamber.

Also, the method of manufacturing silicon oxide according to the embodiment of the present invention may include increasing the temperature in the reaction chamber to a reaction temperature in order to heat the mixture of silicon and silicon dioxide.

The reaction temperature may be in a range of 1300°C to 1500°C. In the case that the reaction temperature is less than 1300°C, the reaction of silicon and silicon dioxide may decrease, and thus, the productivity of silicon oxide may decrease. In the case in which the reaction temperature is greater than 1500°C, silicon and silicon dioxide may be melted. Also, the reaction temperature may be held for 2 hours to 4 hours. The reason for limiting the holding time at the reaction temperature may be the same as that for limiting the reaction temperature.

In the method of manufacturing silicon oxide according to the embodiment of the present invention, the high degree of vacuum of 10⁻⁴ torr to 10⁻¹ torr may be formed by using a rotary pump and a turbo molecular pump. However, the present invention is not limited thereto. Since the reactivity may be thermodynamically high and a low-temperature reaction may be possible at a high degree of vacuum, it may be advantageous to maintain the high degree of vacuum. In the case that the pressure is greater than 10⁻¹ torr, the reaction of silicon and silicon dioxide may decrease, and thus, the productivity of silicon oxide may decrease and an amount of oxygen in silicon oxide may increase. The attainment of a pressure of less than 10⁻⁴ torr may not be facilitated in terms of equipment and process.

According to an embodiment of the present invention, the high degree of vacuum may be maintained until the reaction of silicon and silicon dioxide is completed, and the gas capable of creating a reducing atmosphere may be continuously injected into one side of the reaction chamber and continuously removed from another side of the reaction chamber.

The gas capable of creating a reducing atmosphere may be supplied into the reaction chamber at a flow rate of 1 standard cubic centimeter per minutes (sccm) to 1,000 sccm. In the case that the flow rate is less than 1 sccm, a reducing atmosphere may not be created, and thus, the amount of oxygen in silicon oxide may increase. In the case in which the flow rate is greater than 1,000 sccm, an excessive amount of gas may be supplied, and thus, a manufacturing process may be inefficient.

Also, the gas capable of creating a reducing atmosphere may include one or more selected from the group consisting of H₂, NN₃, and CO, and a mixed gas of an inert gas and H₂, NH₃, or CO. H₂, NH₃, or CO may be included in an amount of 1 vol% to 5 vol% based on the mixed gas.

It may be desirable for the reduction of the amount of oxygen to maintain the gas capable of creating a reducing atmosphere until the reaction is completed. The gas capable of creating a reducing atmosphere may be a H₂-containing gas including H₂ in an amount of 2 vol% to 5 vol%. In the method of manufacturing silicon oxide according to the embodiment of the present invention, the reducing atmosphere may be created or formed by supplying the gas capable of creating a reducing atmosphere into a chamber, and may be created or formed by including a material, such as active carbon, in a separate container in the chamber.

The reducing atmosphere may be formed by one or more selected from the group consisting of active carbon, magnesium, aluminum, tantalum, molybdenum, calcium, and zinc, which are included in the separate container in the reaction chamber.

The gas capable of creating a reducing atmosphere or the material, such as active carbon, that is included in the separate container in the reaction chamber may be reacted with oxygen during the reaction of silicon and silicon dioxide to reduce the amount of oxygen that is included in the silicon oxide manufactured.

In particular, according to an embodiment of the present invention, a high degree of vacuum of 10⁻⁴ torr to 10⁻¹ torr is maintained until the reaction is completed while continuously injecting and flowing a H₂-containing gas, and thus, the amount of oxygen in silicon oxide may be effectively controlled to be less than 1 based on silicon (Si) atoms.

Also, the present invention may provide silicon oxide included in an anode active material of a secondary battery, wherein a ratio of a maximum height (h₂)of a peak in a 2 theta range of 40° to 60° to a maximum height (h₁) a peak in a 2 theta range of 15° to 40° in a X-ray diffraction (XRD) pattern of the silicon oxide satisfies 0.40≤h₂/h₁≤1.5. Furthermore, in the silicon oxide according to an embodiment of the present invention, the ratio of the maximum height of the peak (h₂)in the 2 theta range of 40° to 60° to the maximum height (h₁) of the peak in the 2 theta range of 15° to 40° in a XRD pattern of the silicon oxide may satisfy 0.45≤h₂/h₁≤0.8.

According to an embodiment of the present invention, the h₂/h₁ may affect an amount of oxygen (x) of the silicon oxide. For example, in the case that the ratio of the maximum height (h₂) of the peak in the 2 theta range of 40° to 60° to the maximum height (h₁) of the peak in the 2 theta range of 15° to 40° is less than 0.40, the amount of oxygen in silicon oxide may be greater than 1 based on Si atoms. As a result, an initial efficiency of a secondary battery may decrease. The ratio greater than 1.5 may not be obtained.

For example, XRD measurement conditions are as follows:

Silicon oxide is ground and measured with an X-ray diffractometer (Bruker AXS D-4-Endeavor XRD). Applied voltage and applied current may be respectively set as 40 KV and 40 mA. A measurement range of 2 theta is between 10° and 90°, and the XRD measurement may be performed by step scanning at an interval of 0.05°. In this case, a variable divergence slit (6 mm) may be used and, in order to reduce a background noise due to a polymethyl methacrylate (PMMA) holder, a large PMMA holder (diameter=20 mm) may be used. An intensity ratio of a peak in a range of 40° to 60° to a peak in a range of 15° to 40° may be obtained by using an EVA program (Bruker Corporation).

The silicon oxide may be amorphous. When compared to crystalline silicon oxide during the XRD measurement of amorphous silicon oxide, components of the crystalline silicon oxide may appear as peaks. However, in the amorphous silicon oxide, peaks of a trace material may not appear. That is, a noise reduction effect may be obtained, in which unnecessary peaks are removed because the peaks of the trace material do not appear in the XRD measurement.

In amorphous silicon oxide according to an embodiment of the present invention, a full width at half maximum (FWHM) of a maximum peak in a 2θ range of 15° to 40° in a XRD (Bruker AXS D-4-Endeavor XRD) pattern of the amorphous silicon oxide may be in a range of 7° to 15°, for example, 9° to 13°, and a FWHM of a maximum peak in a 2θ range of 40° to 60° may be in a range of 5° to 13°, for example, 8° to 10°.

In the present invention, the FWHM quantifies a peak width at a half position of the maximum intensity of the peak in the 2 theta range of 15° to 40° or 40° to 60°, which is obtained by the XRD of the silicon oxide.

The FWHM may be represented as degrees (°), i.e., the unit of 2 theta, and the higher the crystallinity of the silicon oxide is, the lower the value of the FWHM may be. An average particle diameter of the silicon oxide may be in a range of 100 nm to 100 µm. However, the present invention is not limited thereto.

The silicon oxide according to the embodiment of the present invention may be SiOₓ (where 0<x<1). Also, silicon in the silicon oxide may be crystalline or amorphous. In the case that the silicon included in the silicon oxide is crystalline, a crystal size of the silicon is 300 nm or less, may be 100 nm or less, and for example, may be in a range of 0.05 nm to 50 nm. In this case, the crystal size may be measured by XRD analysis or an electron microscope (e.g., scanning electron microscope (SEM) and transmission electron microscope (TEM)).

Silicon particles generally used may accompany very complex crystal changes in reactions which electrochemically absorb, store, and release lithium atoms. Composition and crystal structure of the silicon particles change to silicon (Si) (crystal structure: Fd3m), LiSi (crystal structure: I41/a), Li₂Si (crystal structure: C2/m), Li₇Si₂ (Pbam), and Li₂₂Si₅ (F23) as the reactions which electrochemically absorb, store, and release lithium atoms proceed. Also, a volume of the silicon particle expands to about 4 times according to the complex changes in the crystal structure. However, since the reaction between SiOₓ according to the embodiment of the present invention and lithium atoms may be performed while maintaining the structure of SiOₓ and the range of x of SiOₓ is less than 1, the amount of oxygen may be decreased. Thus, the initial efficiency of the secondary battery may increase.

Also, the present invention may provide an anode active material including the silicon oxide.

Furthermore, the present invention provides a secondary battery including a cathode including a cathode active material; a separator; an anode including the anode active material; and an electrolyte.

Since the secondary battery according to an embodiment of the present invention may include an anode active material including the silicon oxide, the initial efficiency of the secondary battery may be improved. Specifically, in the case that a ratio of the maximum height (h₂) of the peak in the 2θ range of 40° to 60° to a maximum height (h₁) of the peak in the 2θ range of 15° to 40° in a XRD pattern of the silicon oxide satisfies 0.40≤h₂/h₁≤1.5, the initial efficiency of the secondary battery may be in a range of 67% to 85%. Also, in the case in which the ratio of the maximum height (h₂) of the peak in the 2θ range of 40° to 60° to the maximum height (h₁) of the peak in the 2θ range of 15° to 40° in a XRD pattern of the silicon oxide satisfies 0.45≤h₂/h₁≤0.8, the initial efficiency of the secondary battery may be in a range of 72% to 85%.

For example, the anode may be prepared by coating an anode current collector with a mixture of an anode active material, a conductive agent, and a binder, and then drying the coated anode current collector. If necessary, a filler may be further added. The cathode may also be prepared by coating a cathode current collector with a cathode active material and drying the coated cathode current collector.

The separator is disposed between the cathode and the anode, and a thin insulating film having high ion permeability and mechanical strength may be used as the separator. Since the current collectors, electrode active materials, conductive agent, binder, filler, separator, electrolyte, and lithium salt are known in the art, the detailed descriptions thereof are omitted in the present specification.

The separator is disposed between the cathode and the anode to form a battery structure, the battery structure is wound or folded to put in a cylindrical battery case or prismatic battery case, and then a secondary battery is completed when the electrolyte is injected thereinto. Also, the battery structure is stacked in a bi-cell structure, impregnated with the electrolyte, and a secondary battery is then completed when the product thus obtained is put in a pouch and sealed.

Hereinafter, the present invention will be described in detail, according to specific examples. The invention may, however, be embodied in many different forms and should not be construed as being limited to the embodiments set forth herein.

### <Manufacture of SiOₓ>

### Example 1

40 g of Si and 86 g of SiO₂ were put in a bottle and completely mixed by a pain shaker at a rate of 300 rpm for 3 hours or more. Next, an alumina boat containing 12.5 g of the mixture of Si and SiO₂ was placed in an alumina inner tube having one end blocked, which was placed in an alumina outer tube of a reactor. It was heated to 1400°C while increasing the degree of vacuum of the reactor by operating a rotary pump and a turbo molecular pump. In this case, the temperature was increased from room temperature to 800°C for 1 hour and 30 minutes and from 800°C to 1400°C, i.e., a reaction temperature, for 2 hours and 30 minutes. The reaction was performed at 1400°C for 3 hours after the temperature reaches the reaction temperature. A mixed gas of H₂/N₂ (H₂: 2%) was supplied at a flow rate of 800 sccm and the pressure in this case was 1.2×10⁻¹ torr. The pressure was maintained at 1.2×10⁻¹ torr until the reaction was completed while continuously supplying the mixed gas of H₂/N₂. The sublimator was naturally cooled after the reaction was completed. When the temperature of the sublimator was 300°C or less, the gas supply was stopped to manufacture silicon oxide.

### Example 2

Silicon oxide was manufactured in the same manner as in Example 1 except that 0.83 g of active carbon was put in an alumina boat instead of supplying a mixed gas of H₂/N₂ (H₂: 2%) and the pressure was decreased to 8.8×10⁻² torr.

### Comparative Example 1

Silicon oxide was manufactured in the same manner as in Example 1 except that a mixed gas of H₂/N₂ was not used and the pressure was decreased to 3.0×10⁻¹ torr while increasing the temperature.

### <Preparation of Coin-type Half Cell>

### Example 3

SiOₓ manufactured in Example 1 as an anode active material, acetylene black as a conductive agent, and polyvinylidene fluoride as a binder were mixed at a weight ratio of 95:1:4 and the mixture was mixed with a N-methyl-2-pyrrolidone solvent to prepare a slurry. One surface of a copper current collector was coated with the prepared slurry to a thickness of 30 µm, dried and rolled. Then, an anode was prepared by punching into a predetermined size.

10 wt% fluoroethylene carbonate based on a total weight of an electrolyte solution was added to a mixed solvent, which includes 1.0 M LiPF₆ and an organic solvent prepared by mixing ethylene carbonate and diethyl carbonate at a weight ratio of 30:70, to prepare an non-aqueous electrolyte solution.

A lithium foil was used as a counter electrode, a polyolefin separator was disposed between both electrodes, and a coin-type half cell was then prepared by injecting the electrolyte solution.

### Example 4

A coin-type half cell was prepared in the same manner as in Example 3 except that SiOₓ manufactured in Example 2 was used as an anode active material.

### Comparative Example 2

A coin-type half cell was prepared in the same manner as in Example 3 except that SiOₓ manufactured in Comparative Example 1 was used as an anode active material.

### Experimental Example 1: X-Ray Diffraction Analysis

The silicon oxides manufactured in Examples 1 and 2 and Comparative Example 1 were ground and measured with an X-ray diffractometer (Bruker AXS D-4-Endeavor XRD).

Applied voltage and applied current were respectively set as 40 KV and 40 mA. A measurement range of 2θ was between 10° and 90°, and the XRD measurement was performed by step scanning at an interval of 0.05°. In this case, a variable divergence slit (6 mm) was used and, in order to reduce a background noise due to a polymethyl methacrylate (PMMA) holder, a large PMMA holder (diameter=20 mm) was used. An intensity ratio of a peak in a range of 40° to 60° to a peak in a range of 15° to 40° was obtained by using an EVA program (Bruker Corporation). Values of h₂/h₁, i.e., a ratio of the maximum height (h₂) of the peak in the 2θ range of 40° to 60° to the maximum height (h₁) of the peak in the 2θ range of 15° to 40°, are presented in Table 1 below.

Also, crystallinities of the silicon oxides manufactured in Examples 1 and 2 and Comparative Example 1 were identified. Full width at half maximum (FWHM) values of maximum peaks in the 2θ range of 15° to 40°, i.e., peaks at about 25°, and maximum peaks in the 2θ range of 40° to 60°, i.e., peaks at about 52°, in a XRD pattern are presented in Table 1 below.

**[Table 1]**

| | h₂/h₁ | FWHM of maximum peak (15° to 40°) | FWHM of maximum peak (40° to 60°) |
|---|---|---|---|
| Example 1 | 0.45 | 11.22 | 8.55 |
| Example 2 | 0.45 | 10.79 | 8.64 |
| Comparative Example 1 | 0.24 | 9.65 | 7.50 |

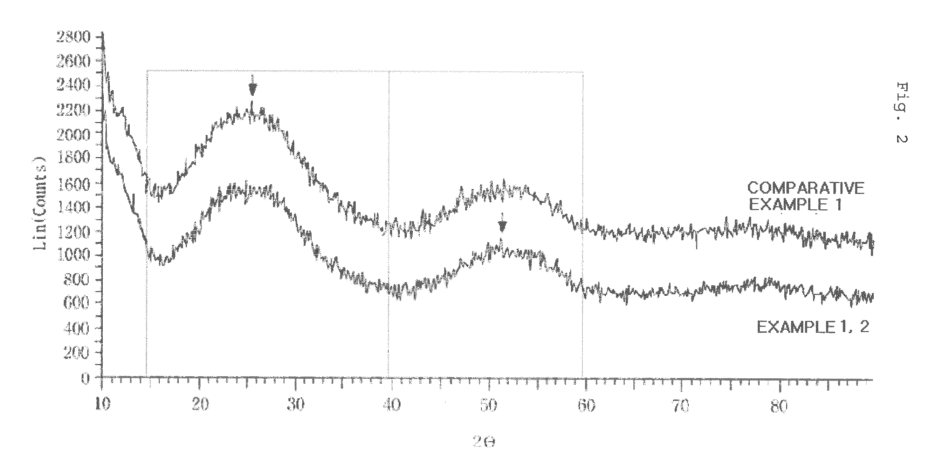

FIG. 2 illustrates the maximum height (h₁) of the peak in the 2θ range of 15° to 40° and the maximum height (h₂)of the peak in the 2θ range of 40° to 60° in a XRD pattern of the silicon oxides manufactured in Examples 1 and 2 and Comparative Example 1 according to the present invention.

### Experimental Example 2: Initial Efficiency Measurement

In order to investigate initial efficiencies of the coin-type half cells prepared in Examples 3 and 4 and Comparative Example 2, the coin-type half cells prepared in Examples 3 and 4 and Comparative Example 2 were charged at 0.1 C to a voltage of 5 mV and charged to a current of 0.005 C at 5 mV under constant current/constant voltage (CC/CV) conditions at 23°C, and then discharged at 0.1 C to a voltage of 1.5 V under a constant current (CC) condition to measure the initial efficiencies. The results thereof are presented in Table 2 below.

**[Table 2]**

| | Efficiency (1^{st} Efficiency) |
|---|---|
| Example 3 | 72.49% |
| Example 4 | 72.49% |
| Comparative Example 2 | 59.72% |

As the result of measuring the initial efficiencies of Examples 3 and 4 and Comparative Example 2, the initial efficiencies of the secondary batteries prepared in Examples 3 and 4, in which SiOₓ having a ratio of the maximum height of the peak in the 2θ range of 40° to 60° to the maximum height of the peak in the 2θ range of 15° to 40° of 0.45 was used, were 72.49%, and the initial efficiency of the secondary battery prepared in Comparative Example 2, in which SiOₓ having a height ratio of 0.24 was used, was 59.72%. Therefore, it may be understood that the initial efficiencies of the secondary batteries of Examples 3 and 4 having a height ratio of 0.45 were significantly better than the initial efficiency of the secondary battery of Comparative Example 2.

### Reference Numerals

1: REACTION CHAMBER
2: REACTOR
3: CONTAINER
4: ELECTRIC FURNACE
5: VACUUM PUMP
6: COLLECTOR
7: GAS NOZZLE

### INDUSTRIAL APPLICABILITY

According to the present invention, since an amount of oxygen in silicon oxide may be controlled by creating a reducing atmosphere and controlling a pressure, silicon oxide having a low amount of oxygen of less than 1 based on Si atoms may be obtained.

When the silicon oxide having a low amount of oxygen is used as an anode active material, initial efficiency and lifetime characteristics of a secondary battery may be further improved. Also, since the initial efficiency of the secondary battery may be predicted by calculating a height ratio in a specific range of 2θ in a X-ray diffraction pattern of the silicon oxide, the present invention may be suitable for a secondary battery.

## Claims

1. A method of manufacturing silicon oxide, the method comprising:
mixing and heating silicon and silicon dioxide;
supplying a gas capable of creating a reducing atmosphere; and
reacting the mixture at a pressure of 10⁻⁴ torr to 10⁻¹ torr.

2. The method of claim 1, wherein the gas capable of creating a reducing atmosphere comprises one or more selected from the group consisting of H₂, NN₃, and CO, or a mixed gas of an inert gas and H₂, NH₃, or CO.

3. A method of manufacturing silicon oxide, the method comprising:
mixing silicon and silicon dioxide;
heating the mixture with a material creating a reducing atmosphere; and
reacting the mixture at a pressure of 10⁻⁴ torr to 10⁻¹ torr.

4. The method of claim 3, wherein the material creating a reducing atmosphere comprises one or more selected from the group consisting of active carbon, magnesium, aluminum, tantalum, molybdenum, calcium, and zinc.

5. The method of claim 1 or 3, wherein the pressure is maintained until the reaction of silicon and silicon dioxide is completed, and
the gas capable of creating a reducing atmosphere is continuously injected into one side of a reaction chamber and continuously removed from another side of the reaction chamber.

6. The method of claim 5, wherein the gas capable of creating a reducing atmosphere is a H₂-containing gas including H₂ in an amount of 2 vol% to 5 vol%.

7. Silicon oxide included in an anode active material of a secondary battery,
wherein a ratio of a maximum height (h₂) of a peak in a 2 theta range of 40° to 60° to a maximum height (h₁) of a peak in a 2 theta range of 15° to 40° in a X-ray diffraction (XRD) pattern of the silicon oxide satisfies 0.40≤h₂/h₁≤1.5.

8. The silicon oxide of claim 7, wherein the ratio of the maximum height (h₂) of the peak in the 2 theta range of 40° to 60° to the maximum height (h₁) of the peak in the 2 theta range of 1.5° to 40° in a XRD pattern of the silicon oxide satisfies 0.45≤h₂/h₁≤0.8.

9. The silicon oxide of claim 7, wherein the silicon oxide is SiOₓ (where 0<x<1).

10. The silicon oxide of claim 9, wherein the silicon oxide is amorphous.

11. The silicon oxide of claim 7, wherein a full width at half maximum (FWHM) of a maximum peak in a 2 theta range of 15° to 40° in a XRD pattern is in a range of 7° to 15°.

12. The silicon oxide of claim 7, wherein a FWHM of a maximum peak in a 2 theta range of 40° to 60° in a XRD pattern is in a range of 5° to 13°.

13. The silicon oxide of claim 7, wherein silicon in the silicon oxide is crystalline or amorphous.

14. The silicon oxide of claim 13, wherein a crystal size of silicon is 300 nm or less when the silicon is crystalline.

15. An anode active material comprising the silicon oxide of claim 7.

16. A secondary battery comprising a cathode including a cathode active material; a separator; an anode including the anode active material of claim 15; and an electrolyte.

17. The secondary battery of claim 16, wherein an initial efficiency of the secondary battery is in a range of 67% to 85%.
